# FASCICULE DE BREVET EUROPEEN

(11) **EP 2 740 010 B1**
(45) Date de publication et mention de la délivrance du brevet: **01.04.2020**
(21) Numéro de dépôt: 12745821.4
(22) Date de dépôt: 03.08.2012
(51) Int. Cl.: G05B 19/042, H04L 12/28

(54) **SYSTÈME DE COMMANDE D'ÉQUIPEMENTS DOMOTIQUES ET PROCÉDÉ DE MISE EN OEUVRE D'UN SYSTÈME DE COMMANDE**
SYSTEM ZUR STEUERUNG VON HAUSHALTSANWENDUNGEN UND VERFAHREN ZUM EINSATZ DIESES STEUERUNGSSYSTEMS
SYSTEM FOR CONTROLLING DOMESTIC APPLIANCES AND METHOD FOR IMPLEMENTING A CONTROL SYSTEM

(30) Priorité: 04.08.2011 FR 1157164
(43) Date de publication de la demande: 11.06.2014
(73) Titulaire: Somfy Activites SA, 74300 Cluses (FR)
(72) Inventeur: CAVAREC, Pierre-Emmanuel, F-74130 Mont Saxonnex (FR); MIGNOT, Pierre, F-05380 Chateauroux-les-Alpes (FR)
(74) Mandataire: Lavoix
(86) Numéro de dépôt international: PCT/EP2012/065225
(87) Numéro de publication internationale: WO 2013/017681

(56) Documents cités:
- WO-A1-2008/142644
- FR-A1- 2 912 863
- FR-A1- 2 916 870
- US-A1- 2006 186 197

## Description

La présente invention concerne un système de commande d'équipements domotiques équipant un bâtiment, en particulier un bâtiment ouvert au public. L'invention concerne également un procédé de mise en œuvre d'un tel système de commande. Le domaine de l'invention est celui des systèmes de commande domotique, pilotant les équipements domotiques tels que les éclairages, les chauffages, les climatisations, les ventilations, les actionneurs de fermeture ou de protection solaire, de manœuvre de panneaux mobiles ou d'écrans.

De manière classique, ces systèmes de commande domotiques comportent des points de commande nomades ou fixes, ainsi que des automatismes permettant de faire fonctionner les équipements domotiques. Les points de commande présentent une interface utilisateur plus ou moins évoluée, permettant à un utilisateur d'envoyer des ordres de commande vers les automatismes et de lire des informations en retour. Les automatismes peuvent être des actionneurs électromécaniques et/ou des dispositifs d'alimentation en énergie des équipements domotiques.

Dans un bâtiment public, tel qu'un café, un restaurant ou un hôtel, les points de commande d'équipements situés dans les parties communes sont généralement inaccessibles au public. Lorsque le système comprend un point de commande central, celui-ci est accessible au gérant mais pas aux clients. Certains équipements peuvent néanmoins disposer d'un point de commande propre, accessible au public, au moins pour certaines fonctions. Par exemple, une lampe peut être équipée d'un variateur de lumière, tandis qu'un store peut être actionné par un boîtier de commande disposé sur le mur.

EP-A-2 196 877 décrit un système de commande des équipements domotiques dans un bâtiment. Le système comprend un ou plusieurs points de commande, par exemple un terminal nomade ou un panneau mural. Chaque point de commande comprend un écran de visualisation affichant des icones de différents types, représentant les équipements domotiques en précisant leur fonction, leur localisation et leur état. Ce système de commande est pratique et confortable à utiliser. Ce système n'est en revanche pas adapté pour les usagers d'un bâtiment public, car les points de commande sont du type centralisé. Leur multiplication serait coûteuse et permettrait difficilement d'autoriser ou restreindre l'accès à certains équipements ou à certaines fonctions.

FR-A-2 912 863 décrit également un système de commande des équipements domotiques équipant un bâtiment. Ce système comprend notamment un terminal nomade, des étiquettes associées aux équipements, un ensemble de communication comprenant un modem et un routeur wi-fi, ainsi qu'un serveur de stockage d'informations relatives aux équipements. Chaque équipement comprend une interface basique permettant son pilotage par un opérateur, indépendamment des autres éléments constitutifs du système, dans un mode de fonctionnement normal. En outre, l'opérateur peut utiliser le terminal nomade pour piloter un équipement domotique, dans un mode de fonctionnement avancé, après reconnaissance de l'étiquette et réception des informations correspondantes en provenance du serveur. En mode avancé, le système présente un fonctionnement différé entre la transmission des informations au terminal nomade et le pilotage effectif des équipements. Le terminal nomade est un appareil dédié au système, et non un terminal grand public, tel qu'un téléphone mobile.

FR-A-2 916 870 décrit une interface homme/machine pour un système domotique.

Le but de la présente invention est de proposer un système de commande simple, pratique et convivial à utiliser, procurant aux usagers d'un bâtiment public un accès partiel et temporaire aux moyens de commande des équipements domotiques.

A cet effet, l'invention a pour objet un système comprenant :
- un point de commande pilotant le ou les équipements domotiques équipant le bâtiment ;
- une passerelle de communication entre le point de commande et au moins un terminal nomade appartenant à un usager du bâtiment ; et
- au moins un marqueur primaire lisible par des moyens matériels et logiciels de reconnaissance équipant le terminal nomade, le marqueur primaire étant associé à au moins un équipement domotique prédéterminé ;
Le système est caractérisé en ce que le point de commande fonctionne :
- soit dans un mode normal, où le point de commande pilote indépendamment l'équipement domotique,
- soit dans un mode avancé, où le point de commande pilote l'équipement domotique en fonction d'informations transmises par le terminal nomade en communication avec le point de commande par l'intermédiaire de la passerelle ;
et en ce que l'identification du marqueur primaire, par des moyens d'identification équipant le point de commande, autorise une activation du mode avancé pour le pilotage du ou des équipements domotiques associés à ce marqueur primaire.

Ainsi, l'invention permet d'adapter le fonctionnement des équipements domotiques aux usagers du bâtiment, en leur offrant un accès personnalisé à la commande de ces équipements. Le même point de commande peut fonctionner en mode normal ou en mode avancé, en alternance et sélectivement pour chaque marqueur primaire. En mode avancé, les informations sont transmises en temps réel du terminal nomade au point de commande via la passerelle de communication. L'identification du marqueur primaire par le point de commande autorise le passage du mode normal au mode avancé, néanmoins d'autres conditions peuvent être requises pour l'activation effective du mode avancé, pour des raisons pratiques ou de sécurité. Dans tous les cas, grâce au système de commande selon l'invention, les usagers utilisent simplement un terminal nomade muni de moyens de reconnaissance des marqueurs, tel qu'un appareil photographique, un scanner ou une caméra vidéo. Le système peut être installé de manière simple dans tout bâtiment accueillant du public, comme un café, un bar, un restaurant ou un hôtel.

Selon d'autres caractéristiques avantageuses de l'invention, prises isolément ou en combinaison :
- Le système comprend au moins un marqueur primaire individuel associé à un équipement domotique prédéterminé, l'identification du marqueur primaire individuel autorisant l'activation du mode avancé pour le pilotage de l'équipement domotique prédéterminé.
- Le système comprend au moins un marqueur primaire de groupe associé à un groupe incluant plusieurs équipements domotiques, l'identification du marqueur primaire de groupe autorisant l'activation du mode avancé pour le pilotage de tous les équipements domotiques du groupe.
- Le point de commande pilote les équipements domotiques d'un groupe soit un à un, soit en coordination les uns avec les autres, et au moins certains des équipements domotiques du groupe sont pilotés en mode avancé selon une coordination différente par rapport au mode normal.
- Le système comprend également un marqueur global associé au point de commande et l'activation du mode avancé pour le pilotage du ou des équipements domotiques associés à un marqueur primaire est autorisée après identification, d'une part, du marqueur global et, d'autre part, du marqueur primaire.
- La configuration du système intègre un paramètre temporel, par exemple un horaire précis de la journée ou une durée écoulée, qui annule l'identification du marqueur global et/ou du marqueur primaire par les moyens d'identification et désactive le mode avancé pour le pilotage des équipements domotiques.
- L'identification du ou d'un des marqueurs, par les moyens d'identification équipant le point de commande, autorise l'activation du mode avancé pour le pilotage du ou des équipements domotiques associés, avec une limitation temporelle, spatiale et/ou fonctionnelle.
- Le système comprend également au moins un marqueur auxiliaire dont la reconnaissance, par les moyens de reconnaissance équipant le terminal nomade, crée une liaison de communication avec un terminal à disposition d'un membre du personnel du bâtiment, notamment un serveur, un maître d'hôtel, un agent de nettoyage ou un réceptionniste.
- Les moyens de reconnaissance équipant le terminal nomade comprennent un dispositif d'acquisition d'images, en particulier un appareil photographique, un scanner et/ou une caméra vidéo.
- Le ou au moins l'un des marqueurs est un marqueur code-barres, lisible notamment par un appareil photographique.

L'invention a également pour objet un procédé de mise en œuvre d'un système de commande d'équipements domotiques équipant un bâtiment, le système comprenant :
- un point de commande pilotant au moins un équipement domotique équipant le bâtiment, le point de commande pilotant indépendamment l'équipement domotique dans un mode normal, et
- une passerelle de communication entre le point de commande et au moins un terminal nomade appartenant à un usager du bâtiment.
Le procédé est caractérisé en ce qu'il comprend des étapes suivantes successives :
- une étape de lecture d'un marqueur primaire associé à au moins un équipement domotique prédéterminé, par un terminal nomade appartenant à un usager du bâtiment ;
- une étape de connexion du terminal nomade au point de commande par l'intermédiaire de la passerelle ;
- une étape d'identification du marqueur primaire par le point de commande ; et
- une étape de pilotage du ou des équipements domotiques associés au marqueur primaire, dans un mode avancé où le point de commande pilote chaque équipement domotique concerné en fonction d'informations transmises par le terminal nomade en communication avec le point de commande par l'intermédiaire de la passerelle.
Selon une variante particulière, le procédé comprend également au moins :
- une première étape de lecture d'un marqueur global, associé au point de commande, par le terminal nomade ; et
- une deuxième étape d'identification du marqueur global par le point de commande ;
cette première étape et cette deuxième étape devant être accomplies, en plus de l'étape d'identification du marqueur primaire, pour activer le mode avancé du point de commande.

En outre, le procédé comprend également une étape de désactivation du mode avancé, cette étape de désactivation étant provoquée par la réalisation d'une condition de déconnexion entre le terminal et le point de commande.

L'invention sera mieux comprise à la lecture de la description qui va suivre, donnée uniquement à titre d'exemple non limitatif et faite en référence aux dessins annexés sur lesquels :
- la figure 1 est une représentation schématique d'un premier bâtiment équipé d'un système de commande conforme à l'invention ;
- la figure 2 est un schéma représentant le système utilisé à la figure 1 et son environnement ;
- la figure 3 est un logigramme représentant un procédé conforme à un premier mode de mise en œuvre du système des figures 1 et 2 ;
- la figure 4 est un logigramme représentant un procédé conforme à un deuxième mode de mise en œuvre du système des figures 1 et 2 ; et
- la figure 5 est une représentation schématique d'un second bâtiment équipé du système de commande conforme à l'invention.

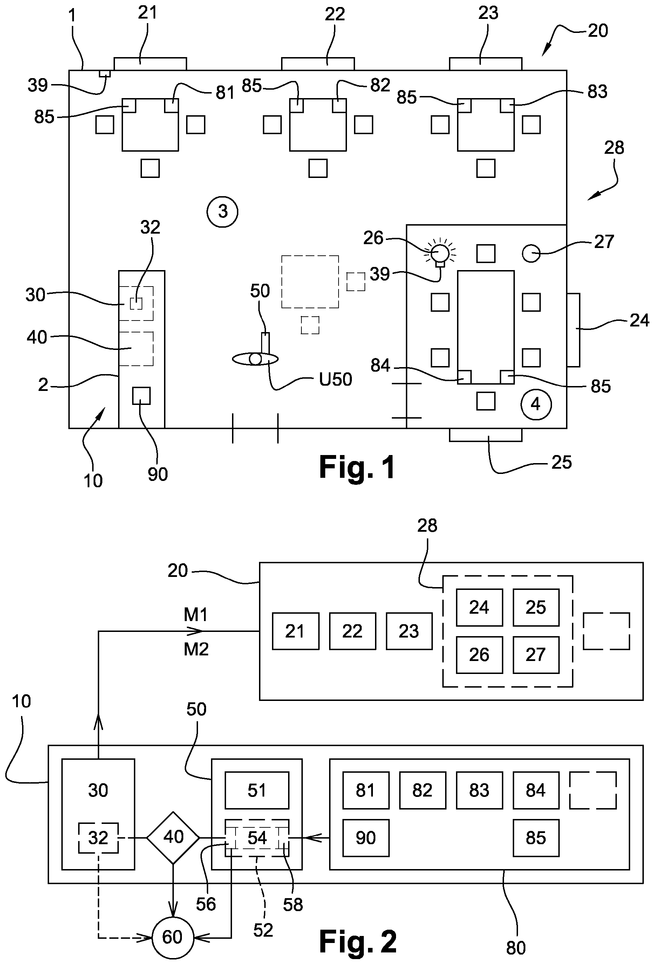

Sur la figure 1 est représenté un bâtiment 1 équipé d'un système 10, conforme à l'invention, de commande d'équipements domotiques 20 installés dans le bâtiment 1.

Le système de commande 10 est représenté plus précisément à la figure 2.

Le bâtiment 1 est un bar comprenant un comptoir 2, une salle 3 et une partie privative 4. Le comptoir 2 est accessible au personnel et au gérant du bar, tandis que la salle 3 et la partie 4 sont accessibles aux clients, autrement dit aux usagers U50 du bâtiment 1. La partie privative 4 est accessible sur réservation. Dans les différentes parties, partagée ou privative, un utilisateur U50 peut souhaiter gérer les équipements domotiques conformément à ses souhaits.

En alternative, le bâtiment 1 peut être tout type de bâtiment public et présenter toute autre configuration. A titre d'exemples non limitatifs, le bâtiment 1 peut être un café, un restaurant, un club privé, un hôtel, un appartement ou une villa en location, une administration ou une bibliothèque publique.

Le bâtiment 1 est équipé d'au moins un, et de préférence de plusieurs, équipements domotiques 20 du même type ou de types différents.

Les équipements 20 comprennent des actionneurs et des dispositifs domotiques sur lesquels les actionneurs agissent pour les déplacer ou les activer. Les actionneurs comprennent de préférence des moyens de réception d'ordres de commande par voie hertzienne. En alternative, les ordres peuvent être transmis aux actionneurs par d'autres moyens de communication, tels que courants porteurs ou liaisons de type infrarouge.

Sur la figure 1, le bâtiment 1 comprend des équipements domotiques 20 constitués par des stores motorisés 21, 22, 23, 24 et 25, un dispositif d'éclairage 26 et un dispositif de ventilation 27. Les stores 21 à 23 sont disposés dans la salle 3, tandis que les stores 24, 25 et les dispositifs 26, 27 sont disposés dans la partie privative 4. De préférence, le bâtiment 1 comprend également d'autres équipements domotiques 20, non représentés dans un but de simplification. A titre d'exemples non limitatifs, les équipements 20 peuvent être des volets roulants motorisés, des dispositifs de chauffage-climatisation, des dispositifs de ventilation ou des écrans de télévision.

Le système de commande 10 comprend un point de commande 30, une passerelle de communication 40, ainsi que des marqueurs 80 associés aux équipements 20. En particulier, le système 10 et le point de commande 30 fonctionnent soit dans un mode M1 dit « normal », où le point de commande 30 pilote seul les équipements domotiques 21-27, soit dans un mode M2 dit « avancé », où le point de commande 30 pilote les équipements domotiques 21-27 en fonction d'informations transmises par le terminal nomade 50 en communication avec le point de commande 30 par l'intermédiaire de la passerelle 40.

Le point de commande 30 est configuré pour piloter les différents équipements 20, en mode normal M1 et/ou en mode avancé M2. En particulier, pour la mise en œuvre du mode avancé M2, le point de commande 30 comprend des moyens matériels et logiciels 32, représentés schématiquement aux figures 1 et 2, d'identification des marqueurs 80. Le point de commande 30 peut être un boîtier ou un panneau mural agencé derrière le comptoir 2, accessible uniquement au personnel de l'établissement. En alternative, le point de commande 30 peut être un appareil nomade tel qu'un assistant digital personnel, un téléphone avancé ou une tablette numérique. De préférence, au moins certains des équipements 20 peuvent également être pilotés par des moyens de commande 39 qui leur sont propres, par exemple un interrupteur, une télécommande ou un boîtier fixé au mur du bâtiment 1.

Les équipements 20 et le point de commande 30 communiquent entre eux par utilisation d'un même protocole radiofréquences, par exemple le protocole « io-homecontrol » (marque déposée). En alternative, plusieurs protocoles peuvent être utilisés par l'intermédiaire de la passerelle de communication 40. Le point de commande 30 communique directement avec les équipements domotiques 20, ou par l'intermédiaire de la passerelle 40.

La passerelle de communication 40 peut être reliée au point de commande 30 par des moyens filaires, par exemple de type Ethernet, ou sans-fil, par exemple Wi-Fi ou Bluetooth. La passerelle de communication 40 est raccordée au monde extérieur au bâtiment 1, notamment à un serveur internet 60. La passerelle de communication 40 est un dispositif créant un réseau sans fil dans le bâtiment 1, par exemple un boîtier ADSL ou un routeur Wi-Fi.

En alternative, le point de commande 30 et la passerelle 40 peut être tous types de dispositifs adaptés à la présente application. Selon une variante particulière, la passerelle 40 peut être intégrée directement au point de commande 30.

Un usager U50 disposant d'un terminal nomade 50, par exemple un assistant digital personnel (PDA), un téléphone avancé (smartphone en anglais), une tablette numérique ou un ordinateur portable, peut connecter ce terminal 50 à la passerelle 40. A cet effet, le terminal 50 comprend des moyens 56 de communication sans-fil, par exemple du type GSM, 3G ou Bluetooth. Si la passerelle 40 est configurée à cet effet, le terminal 50 peut alors accéder à internet 60 ou à un réseau local par son intermédiaire. En complément, le terminal 50 peut également être configuré pour se connecter à internet 60 par ses propres moyens de communication 56.

Le terminal 50 comprend également une interface utilisateur 51, comprenant par exemple un écran et un clavier, ou un écran tactile assurant à la fois les fonctions d'affichage et de saisie d'informations. Le terminal 50 comprend également un ensemble matériel 54 comprenant un microprocesseur et une mémoire, reliés à l'interface 51 et aux moyens de communication 56. Le matériel 54 peut comprendre différents logiciels, adaptés pour remplir toutes sortes de fonctions utilitaires ou récréatives, pouvant être commandés grâce à l'interface 51. En particulier, le matériel 54 peut inclure une application dédiée permettant l'interaction du terminal 50 avec le système 10, comme détaillé ci-après, par exemple une application de commande d'équipements domotiques, ou une application permettant l'affichage de pages web.

De manière classique pour les dernières générations de terminaux nomades, le terminal 50 comprend des moyens 58 d'acquisition d'images, comme par exemple un appareil photographique, un scanner et/ou une caméra vidéo. Ces moyens 58 sont reliés au matériel 54 et à l'interface 51 du terminal 50. Les images capturées par les moyens 58 sont enregistrées par le matériel 54 et peuvent s'afficher sur l'interface 51. En variante ou en complément, le terminal 50 peut comprendre des moyens de lecture d'un autre type moins courant, tel qu'un lecteur de signaux radio ou infrarouge. Dans le cadre de l'invention, les moyens de lecture 58 sont prévus pour lire des marqueurs 80, comme détaillé ci-après.

En pratique, les éléments 54, 56 et 58, représentés schématiquement à la figure 2, constituent des moyens matériels et logiciels 52 de reconnaissance des marqueurs 80.

Le système 10 comprend différents types de marqueurs 80 associés aux équipements 20. Des marqueurs individuels 81, 82 et 83 sont associés respectivement aux équipements 21, 22 et 23. Un marqueur de groupe 84 est associé à un groupe 28 comprenant plusieurs équipements, plus précisément les équipements 24 à 27. Des marqueurs 85 et 90 sont associés directement au point de commande 30. Ces associations sont prédéterminées, lors de l'installation du système 10 dans le bâtiment 1. On distingue, d'une part, les marqueurs primaires 81 à 84 prévus spécifiquement pour la commande des équipements 20 et, d'autre part, les marqueurs secondaires 85 et 90 prévus pour remplir des fonctions auxiliaires, avec ou sans lien avec la commande des équipements 20.

Comme montré à la figure 1, les marqueurs primaires 81-84 sont disposés à proximité des équipements 21-27 auxquels ils sont associés. De manière non limitative mais pratique, les marqueurs 81-84 sont placés sur la surface de tables équipant le bâtiment 1 et voisines des équipements 21, 22, 23 et du groupe 28. Les marqueurs 81 à 83 sont placés chacun sur une table de la salle 3, tandis que le marqueur 84 est placé sur une table de la partie privative 4.

De préférence, chacune des tables peut également être munie d'un marqueur 85. Ces marqueurs 85 sont destinés à établir une communication avec un terminal à disposition d'un membre du personnel de service, par exemple pour passer commande à distance, demander le nettoyage de la table, signaler le dysfonctionnement d'un équipement 20, ou tout autre besoin qui pourrait se présenter aux usagers U50. Le terminal associé aux marqueurs 85 peut être le point de commande 30 ou un autre appareil.

De préférence également, un ou plusieurs marqueurs globaux 90 sont également répartis dans le bâtiment 1. Par exemple, les marqueurs 90 peuvent être disposés sur le comptoir 2, du côté intérieur de la porte d'entrée du bâtiment 1 et/ou sur les cartes de consommation. Les marqueurs 90 sont associés, par l'intermédiaire du point de commande 30, à l'ensemble des équipements 20, pris dans leur globalité. En variante, le bâtiment 1 ne comprend pas de marqueurs globaux 90.

Les marqueurs 80 peuvent comporter toute forme et technologie adaptée à la présente application. Les marqueurs peuvent être statiques, matérialisant un signal ou une image fixe, ou bien dynamiques, matérialisant un signal ou une image variable de manière séquentielle. Les marqueurs 80 sont de préférence d'un type unique dans un but de simplification du système 10, mais peuvent également être de types différents.

Dans le cadre de l'invention, les marqueurs 80 doivent pouvoir être lus et reconnus par les moyens de reconnaissance 52 équipant le terminal 50, puis identifiés par les moyens d'identification 32 équipant le point de commande 30. Les moyens 52 comprennent généralement des moyens de lecture conventionnels, tel que les moyens d'acquisition d'images 58, et/ou peuvent comprendre des moyens de lecture particuliers, tel qu'un lecteur de signaux infrarouge. De préférence, les marqueurs 80 peuvent être lus par des moyens d'acquisition d'images 58 conventionnels, afin de permettre l'accès au système 10 au plus grand nombre possible de terminaux 50 et d'usagers.

Selon un premier exemple, les marqueurs 80 sont des marqueurs du type « code-barres ». Le code-barres peut être un code-barres matriciel (de type « QR code » ou « Data Matrix »), utilisé notamment pour différentes applications liées à la téléphonie mobile. Un marqueur code-barres est facilement lisible par les moyens d'acquisition d'images 58 du terminal 50, notamment un appareil photographique, de manière connue en soi. Les moyens de reconnaissance 52 du terminal 50 peuvent généralement reconnaître le marqueur code-barres de manière autonome, pour en déduire des informations spécifiques. L'application dédiée au système 10, installée sur le matériel 54, peut être utilisée pour cette reconnaissance et pour interpréter ces informations. En alternative ou en complément, à la lecture du marqueur code-barres 80, le terminal 50 peut se connecter automatiquement à un site internet, afin de visualiser des informations complémentaires, télécharger des données ou programmes sur le matériel 54 et/ou exécuter un programme en ligne. Dans ce cas, la reconnaissance des marqueurs 80 est alors déportée, par exemple au niveau du point de commande 30 et/ou d'internet 60.

Selon un deuxième exemple, les marqueurs 80 comprennent une ou plusieurs diodes émettant une séquence de signaux lumineux. Les moyens de reconnaissance 52 sont alors configurés pour identifier la séquence de signaux, de manière autonome ou par l'intermédiaire de la passerelle 40, comme détaillé ci-dessus pour les marqueurs code-barres. A titre d'exemples non limitatifs, la séquence peut mettre en œuvre le code morse, un code couleur ou un code arbitraire préprogrammé. Lorsque le marqueur comprend plusieurs diodes, celles-ci peuvent former une séquence de signaux combinés.

Selon d'autres exemples non limitatifs, les marqueurs 80 peuvent comprendre des images codées, des codes-barres linéaires, des codes-barres matriciels 2D ou 3D, des puces RFID (radio-frequency identification en Anglais) ou NFC (« Near Field Communication » en Anglais).

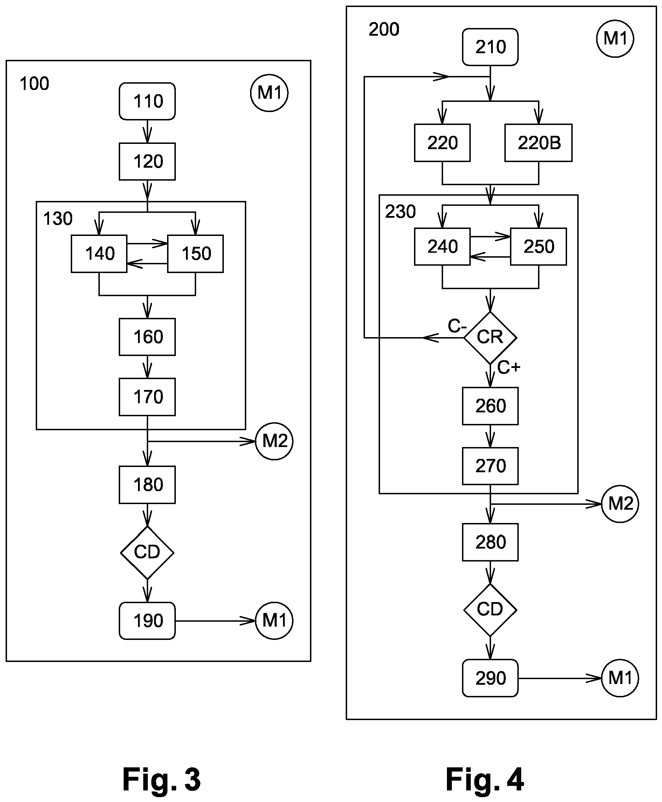

Deux modes de fonctionnement du système de commande 10 sont détaillés ci-après, en lien avec les figures 3 et 4. Plus précisément, la figure 3 illustre un mode 100 de fonctionnement simplifié du système 10, tandis que la figure 4 illustre un mode 200 de fonctionnement préférentiel du système 10. Le mode 100 est plus simple à mettre en œuvre, mais le mode 200 est plus sécurisé.

Le mode 100 comprend tout d'abord une étape initiale 110, correspondant à l'état initial du système 10 et des équipements 20. En particulier, le point de commande 30 fonctionne en mode normal M1 et pilote seul les équipements 20, indépendamment du terminal 50 et de la passerelle 40.

Dans une étape 120, l'usager U50 utilise les moyens d'acquisition 58 de son terminal 50 pour lire l'un des marqueurs primaires 81-84.

L'étape 120 amorce une phase 130 d'identification de ce marqueur 81-84 et d'activation du mode avancé M2 pour le pilotage de chaque équipement 20 associé. Cette phase 130 comprend une séquence d'événements qui doivent être réalisés pour déclencher le passage effectif du mode normal M1 au mode avancé M2, autrement dit pour activer le mode avancé M2, pour le pilotage du ou des équipements 21-27 associés au marqueur primaire 81-84 lu dans l'étape 120. Plus précisément, la phase 130 comprend des étapes 140, 150, 160 et 170 qui sont interdépendantes.

Dans l'étape 140, le terminal 50 se connecte à la passerelle 40. Cette étape 140 peut résulter de la reconnaissance du marqueur 81-84 par le terminal 50 ou, à l'inverse, permettre la reconnaissance du marqueur 81-84 en ligne en permettant au terminal 50 de se connecter à internet 60. Selon une autre alternative, cette étape 140 peut se produire en amont de la phase 130, par exemple lorsque l'usager U50 entre dans le bâtiment 1.

Dans l'étape 150, les moyens de reconnaissance 52 du terminal 50 reconnaissent le marqueur 81-84, à l'aide de l'application dédiée et/ou sur un site internet. Si l'application dédiée est installée sur le matériel 54 du terminal 50 préalablement à l'étape 120, alors la reconnaissance du marqueur 81-84 peut être réalisée directement par cette application, avant l'étape 140. Si le terminal 50 ne comporte pas d'application dédiée, il se connecte alors à un site internet qui fait office d'application dédiée ou permet de télécharger l'application dédiée. Par exemple, si le marqueur 81-84 est un marqueur code-barres, sa lecture dans l'étape 120 provoque une exécution de l'application dédiée ou une connexion automatique à internet. La connexion à internet 60 peut être effectuée après l'étape 140, ou par les moyens de communication 56 propres au terminal 50. Selon une autre alternative, l'application dédiée peut être téléchargée sur un réseau local accessible après connexion à la passerelle 40.

L'étape 160 est réalisée après accomplissement des deux étapes 140 et 150, lorsque le marqueur 81-84 a été reconnu et que le terminal 50 est connecté à la passerelle 40. Les étapes 140 et 150 peuvent être simultanées ou se succéder dans un ordre quelconque, mais doivent avoir été réalisées pour passer à l'étape 160. Dans l'étape 160, le terminal 50 se connecte au point de commande 30 par l'intermédiaire de la passerelle 40. Le point de commande 30 est alors susceptible de recevoir des informations émises par le terminal 50, en particulier des informations relatives à la reconnaissance d'un marqueur 81-84 et des informations correspondant à des ordres de pilotage des équipements 20.

L'étape 170 suit directement l'étape 160. L'étape 170 correspond à l'identification du marqueur primaire 81-84 par les moyens matériels et logiciels 32 qui équipent le point de commande 30 et sont configurés à cet effet. Plus précisément, une fois le terminal 50 connecté au point de commande 30 par l'intermédiaire de la passerelle 40, l'activation du mode avancé M2 nécessite la transmission par le terminal 50 d'informations relatives au marqueur 81-84. Ces informations comprennent, à titre d'exemple non limitatif, un identifiant numérique correspondant au marqueur 81-84. Une fois le marqueur 81-84 identifié par les moyens 32, le point de commande 30 autorise alors la réception et l'exécution d'ordres de commande susceptibles de lui parvenir du terminal 50.

Lorsque la phase 130 est accomplie, c'est-à-dire que les étapes 140, 150, 160 et 170 sont terminées, alors le mode avancé M2 est activé pour le pilotage du ou des équipements 21-27 associés au marqueur primaire 81-84 lu dans l'étape 120. En particulier, la reconnaissance d'un marqueur primaire 81-84, dans l'étape 150, autorise théoriquement le passage au mode avancé M2, mais l'activation effective du mode avancé M2 est conditionnée par d'autres événements, à savoir la réalisation des étapes 140, 160 puis 170.

L'étape 180 succède à la phase 130, lorsque le ou les équipements 21-27 sont pilotés par le point de commande 30 en mode avancé M2. L'usager U50 est libre de piloter le ou les équipements 21-27 concernés, par exemple l'un des équipements 21 à 23 individuellement, ou bien le groupe 28 d'équipements 24-27, en utilisant son terminal 50. L'objectif de l'invention est atteint, à savoir rendre les équipements 20 accessibles et personnalisables par les usagers U50. De plus, le système 10 est configuré pour que plusieurs usagers U50 puissent simultanément se connecter à la passerelle 40 et au point de commande 30. Ainsi, plusieurs usagers U50 peuvent commander en même temps des équipements 20 distincts en mode avancé M2, dans des étapes 180 respectives. De préférence, le point de commande 30 est configuré pour piloter les équipements domotiques 20 soit indépendamment soit en coordination les uns avec les autres. Dans ce cas, en mode avancé M2 des équipements 24-27 d'un groupe 28, au moins certains équipements du groupe 28, par exemple les stores 24 et 25, peuvent être pilotés par le terminal nomade 50 sélectivement de manière synchronisée ou désynchronisée.

Une étape 190 peut succéder à l'étape 180, lorsqu'une condition de déconnexion CD est remplie dans l'étape 180. Cette étape 190 correspond à une rupture de la liaison entre le terminal 50 et le point de commande 30, avec la désactivation du mode avancé M2. En particulier, les conditions CD peuvent être temporelles, spatiales et/ou fonctionnelles. En premier lieu, une condition CD peut correspondre à un ordre de déconnexion donné par l'usager U50 grâce à l'interface 51 de son terminal 50. Selon un autre exemple, une condition CD peut être l'écoulement d'une durée prédéterminée depuis le début de l'étape 180. Une autre condition CD peut être un horaire prédéterminé, tel que l'horaire de fermeture de l'accès au public du bâtiment 1. Une autre condition CD peut être la détection par la passerelle 40 de l'éloignement du terminal 50 en dehors d'un paramètre prédéterminé, signifiant que l'usager U50 a quitté le bâtiment 1. Une autre condition CD peut être la détection, dans un intervalle de temps prédéterminé, d'un nombre important d'ordres de commande à un équipement 20, susceptible d'endommager cet équipement 20. D'autres conditions CD peuvent être mises en œuvre sans sortir du cadre de l'invention.

Egalement, le système 10 peut être configuré pour que chaque équipement 21-23 ou groupe 28 d'équipements puisse être piloté dans l'étape 180 par un unique terminal 50 en même temps. De préférence dans ce cas, le terminal 50 de commande actif est le dernier terminal à avoir reconnu le marqueur 80 associé à cet équipement 20 lors d'une phase 130. Ainsi, lorsqu'un premier usager U50 quitte le bâtiment 1 puis qu'un deuxième usager U50 reconnait le marqueur 80, le premier usager U50 qui est parti ne peut plus piloter cet équipement 20. Un historique des identifications de marqueurs 80, associées à une identification du terminal nomade ayant effectué la lecture (par exemple son adresse IP) est alors utile. Cet historique peut être sauvegardé au niveau du point de commande 30, de la passerelle 40 ou sur un serveur distant. La sauvegarde d'un tel historique est également applicable dans les différents modes de réalisation décrits.

Egalement, le système 10 peut être configuré pour que l'identification d'un deuxième marqueur primaire, par exemple 82, suite à l'identification d'un premier marqueur primaire, par exemple 81, désactive l'identification de ce premier marqueur primaire 81 et le mode avancé M2 pour le pilotage de l'équipement 21 correspondant. Ainsi, le système 10 empêche des plaisantins de se connecter successivement à plusieurs équipements 20, ou aux équipements 20 des tables voisines, alors qu'ils n'en ont pas l'utilité pratique. Egalement, une autre restriction possible peut être la restriction à un nombre limité d'identification de marqueurs 80 différents pour un même terminal nomade 50. Alternativement, ce peut être le nombre d'ordres de commande émis dans un temps limité, associés à un même marqueur 80 et/ou à un même terminal nomade 50, qui peut être restreint.

En outre, le système 10 peut être configuré pour que le mode avancé M2ne donnent accès qu'à certaines fonctions des équipements 20 concernés, les autres fonctions restant accessibles uniquement au personnel du bâtiment 1.

Autrement dit, dans le cadre de l'invention, le système 10 est configuré pour autoriser l'activation du mode avancé M2 avec une limitation temporelle, spatiale et/ou fonctionnelle.

Par ailleurs, l'utilisation du marqueur 85 est comparable à l'utilisation des marqueurs primaires 81-84 dans le mode 100 décrit ci-dessus, excepté que l'accomplissement des étapes 120, 140 et 150 permet de communiquer avec le personnel du bâtiment 1, et non de piloter les équipements 20.

Le mode 200 de fonctionnement préférentiel du système 10, montré à la figure 4, utilise les marqueurs 90 pour améliorer la sécurité du système 10.

Le mode 200 comprend également des étapes, phases et conditions 210, 220, 230, 240, 250, 260, 270, 280, 290 et CD, qui sont comparables à celles du mode 100 et portent les mêmes références augmentées de 100. Les différences se retrouvent principalement au niveau, d'une part, de l'existence d'une étape 220B de lecture d'un marqueur global 90 et, d'autre part, de la phase 230 incluant de plus une condition de reconnaissance CR.

Dans ce mode 200 également, l'identification d'un marqueur primaire 81-84 autorise théoriquement le passage du mode normal M1 au mode avancé M2, mais l'activation effective du mode avancé M2 est conditionnée par d'autres paramètres ou événements. En particulier, le déclenchement du mode avancé M2 est conditionné à la reconnaissance puis l'identification d'un des marqueurs globaux 90, comme détaillé ci-après. La seule identification d'un marqueur primaire 81-84 ne suffit pas.

Lorsque l'usager U50 utilise les moyens d'acquisition d'images 58 de son terminal 50 pour lire un marqueur 81-84 ou un marqueur 90, la phase 230 est déclenchée pour ce marqueur donné, avec la réalisation des étapes 240 et 250. Toutefois, après réalisation de ces étapes 240 et 250, la condition de reconnaissance CR doit être remplie pour permettre la transition vers les étapes 260 et 270, le déclenchement du mode M2 puis l'étape 280.

Comme montré à la figure 4, la condition CR présente un paramètre négatif C-lorsque seule l'une des étapes 220 ou 220B a été effectuée, tandis que la condition CR présente un paramètre positif C+ lorsque les deux étapes 220 et 220B ont été effectués, c'est-à-dire lorsqu'un marqueur primaire 81-84 et un marqueur global 90 ont été lus et reconnus.

En alternative ou en complément de la vérification de la condition CR, une condition d'identification doit être vérifiée pour autoriser le passage de l'étape 270 à l'étape 280. Ainsi, le marqueur primaire 81-84 et le marqueur global 90 doivent avoir été tous deux identifiés par le point de commande 30 pour passer à l'étape 280.

Selon une variante particulière du mode 200, la phase 230 peut être déclenchée seulement par la lecture du marqueur global 90 dans l'étape 220, et non par la lecture du marqueur primaire 81-84. Dans ce cas, l'identification du marqueur global 90 procure un accès théorique du terminal 50 au point de commande 30 en mode avancé M2 pour le pilotage des équipements domotiques 20. Puis l'identification du marqueur primaire 81-84, faisant suite à l'identification du marqueur global 90, procure un accès pratique du terminal 50 au point de commande 30 en mode avancé M2 pour le pilotage du ou des équipements domotiques 21-27 associés à ce marqueur primaire 81-84.

De préférence dans le mode 200, tous les marqueurs globaux 90 sont identiques et changent tous les jours.

En alternative ou en complément, la configuration du système 10 intègre une condition temporelle CD, avec un paramètre temporel correspondant par exemple à un horaire précis de la journée, tel que la fermeture du bâtiment 1 aux usagers U50, ou le départ d'une chambre d'hôtel. Lorsque cette condition CD est réalisée, le système 10 annule l'identification du marqueur global 90 par les moyens d'identification 32 équipant le point de commande 30, déclenchant automatiquement la désactivation du mode avancé M2. Ainsi, le risque de « piratage » des équipements 20 après le départ des usagers U50 est réduit. Une personne mal intentionnée ne peut pas approcher du bâtiment 1 après sa fermeture au public, par exemple de nuit, avec l'intention d'ouvrir un store 21 pour briser la fenêtre qui se trouve derrière.

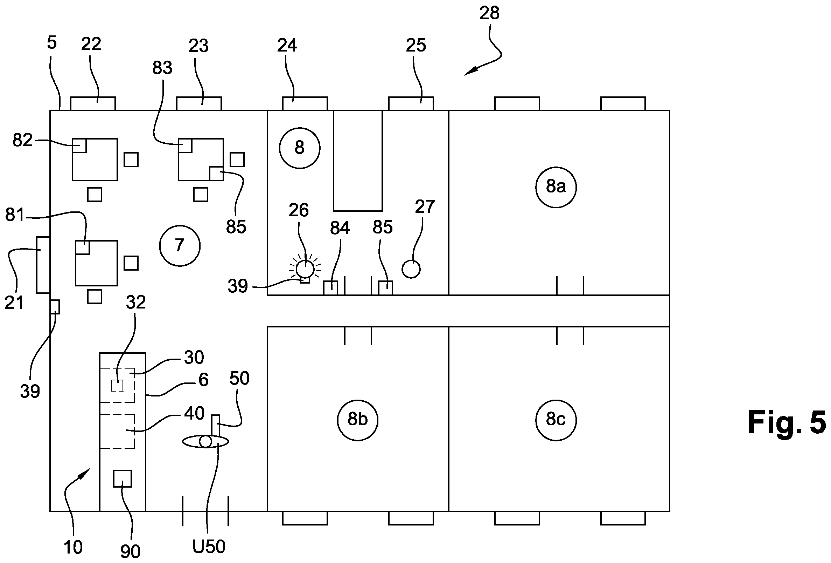

Sur la figure 5 est représenté un deuxième bâtiment 5 équipé du système 10 et d'équipements domotiques 20.

Le bâtiment 5 est un hôtel comprenant une réception 6, une salle commune 7 et des chambres privatives 8, 8a, 8b et 8c. A ces exceptions près, le bâtiment 5 est comparable au bâtiment 1 et est équipé du même système de commande 10. Dans ces conditions, les mêmes éléments comportent les mêmes références numériques, avec un agencement identique ou proche, sur les figures 1 et 5.

En particulier, la chambre 8 de l'hôtel 5 est équipée du groupe 28 d'équipements domotiques 24 à 27, associés à un marqueur primaire 84. Les autres chambres 8b, 8c et 8d sont équipées comme la chambre 8, de manière non représentée dans un but de simplification. Les marqueurs 90 peuvent être placés à la réception 6, mais aussi sur une carte magnétique ou un trousseau de clés d'accès aux chambres 8-8d.

De préférence, lorsqu'un usager U50 se connecte au système 10 depuis sa chambre 8, cet usager U50 peut reproduire les mêmes scénarios de commande des équipements 21-24 que s'il était à son domicile, par exemple à l'aide de l'application dédiée présente sur le terminal 50. Ainsi, l'usager U50 n'a pas à reparamétrer chacun des équipements 21-24 pour se sentir chez lui. Par exemple, il peut programmer les stores 24, 25 comme à son domicile, être réveillé de la même manière que chez lui, avoir une ambiance similaire lorsqu'il souhaite regarder la télévision, etc, en rejouant des scénarios pré-enregistrés sur son terminal nomade 50.

Selon une variante particulière non représentée, le système 10 peut inclure uniquement des marqueurs de groupe 84, associés à tous les équipements 20 du bâtiment 1 ou 5, et aucun marqueur global 90. Ceci est valable par exemple lorsque le bâtiment 1 ou 5 est un appartement ou une villa en location, de sorte que les locataires peuvent accéder facilement à la commande des équipements 20. Dans ce cas également, il est envisageable que les locataires reproduisent les mêmes scénarios de commande des équipements 21-24 que s'ils étaient à leur domicile, à l'aide de l'application dédiée présente sur le terminal 50.

Quel que soit le mode de réalisation, l'invention permet d'adapter le fonctionnement des équipements domotiques aux usagers du bâtiment, en leur offrant un accès personnalisé à la commande de ces équipements, et ceci de manière simple, pratique et ludique.

## Revendications

1. Système (10) de commande d'au moins un équipement domotique (21-27) équipant un bâtiment (1 ; 5), le système (10) comprenant :
- un point de commande (30) pilotant le ou les équipements domotiques (21-27) équipant le bâtiment (1 ; 5) ;
- une passerelle (40) de communication entre le point de commande (30) et au moins un terminal nomade (50) appartenant à un usager (U50) du bâtiment (1 ; 5) ; et
- au moins un marqueur primaire (81-84) lisible par des moyens (52) matériels et logiciels de reconnaissance équipant le terminal nomade (50), le marqueur primaire (81-84) étant associé à au moins un équipement domotique (21-24) prédéterminé ;
le système (10) étant **caractérisé en ce que** le point de commande (30) est configuré pour fonctionner :
- dans un mode normal (M1), où le point de commande (30) pilote indépendamment l'équipement domotique (21-27),
- et dans un mode avancé (M2), où le point de commande (30) pilote l'équipement domotique (21-27) en fonction d'informations transmises par le terminal nomade (50) en communication avec le point de commande (30) par l'intermédiaire de la passerelle (40) ;
et pour que l'identification du marqueur primaire (81-84), par des moyens d'identification (32) équipant le point de commande (30), autorise une activation du mode avancé (M2) pour le pilotage du ou des équipements domotiques (21-27) associés à ce marqueur primaire (81-84).

2. Système (10) selon la revendication précédente, **caractérisé en ce qu'**il comprend au moins un marqueur primaire individuel (81-83) associé à un équipement domotique (21-23) prédéterminé, l'identification du marqueur primaire individuel (81-83) autorisant l'activation du mode avancé (M2) pour le pilotage de l'équipement domotique (21-23) prédéterminé.

3. Système (10) selon l'une des revendications précédentes, **caractérisé en ce qu'**il comprend au moins un marqueur primaire de groupe (84) associé à un groupe (28) incluant plusieurs équipements domotiques (24-27), l'identification du marqueur primaire de groupe (84) autorisant l'activation du mode avancé (M2) pour le pilotage de tous les équipements domotiques (24-27) du groupe (28).

4. Système (10) selon la revendication précédente, **caractérisé en ce que** le point de commande (30) pilote les équipements domotiques (21-27) d'un groupe soit un à un, soit en coordination les uns avec les autres, et **en ce qu'**au moins certains (24, 25) des équipements domotiques (24-27) du groupe (28) sont pilotés en mode avancé (M2) selon une coordination différente par rapport au mode normal (M1).

5. Système (10) selon l'une des revendications précédentes, **caractérisé en ce qu'**il comprend également un marqueur global (90) associé au point de commande (30) et **en ce que** l'activation du mode avancé (M2) pour le pilotage du ou des équipements domotiques (21-27) associés à un marqueur primaire (81-84) est autorisée après identification, d'une part, du marqueur global (90) et, d'autre part, du marqueur primaire (81-84).

6. Système (10) selon la revendication précédente, **caractérisé en ce que** la configuration du système (10) intègre un paramètre temporel, par exemple un horaire précis de la journée ou une durée écoulée, qui annule l'identification du marqueur global (90) et/ou du marqueur primaire (81-84) par les moyens d'identification (32) et désactive le mode avancé (M2) pour le pilotage des équipements domotiques (21-27).

7. Système (10) selon l'une des revendications précédentes, **caractérisé en ce que** l'identification du ou d'un des marqueurs (81-84), par les moyens d'identification (32) équipant le point de commande (30), autorise l'activation du mode avancé (M2) pour le pilotage du ou des équipements domotiques (21-27) associés, avec une limitation temporelle, spatiale et/ou fonctionnelle.

8. Système (10) selon l'une des revendications précédentes, **caractérisé en ce qu'**il comprend également au moins un marqueur auxiliaire (85) dont la reconnaissance, par les moyens de reconnaissance (52) équipant le terminal nomade (50), crée une liaison de communication avec un terminal à disposition d'un membre du personnel du bâtiment, notamment un serveur, un maître d'hôtel, un agent de nettoyage ou un réceptionniste.

9. Système (10) selon l'une des revendications précédentes, **caractérisé en ce que** les moyens de reconnaissance (52) équipant le terminal nomade (50) comprennent un dispositif d'acquisition d'images (54), en particulier un appareil photographique, un scanner et/ou une caméra vidéo.

10. Système (10) selon l'une des revendications précédentes, **caractérisé en ce que** le ou au moins l'un des marqueurs (81-84 ; 85 ; 90) est un marqueur code-barres, lisible notamment par un appareil photographique.

11. Procédé de mise en œuvre d'un système (10) de commande d'équipements domotiques (21-27) équipant un bâtiment (1 ; 5), le système (10) comprenant :
- un point de commande (30) pilotant au moins un équipement domotique (21-27) équipant le bâtiment (1 ; 5), le point de commande (30) pilotant indépendamment l'équipement domotique (21-27) dans un mode normal (M1), et
- une passerelle (40) de communication entre le point de commande (30) et au moins un terminal nomade (50) appartenant à un usager (U50) du bâtiment (1 ; 5),
le procédé étant **caractérisé en ce qu'**il comprend des étapes suivantes successives :
- une étape (120 ; 220) de lecture d'un marqueur primaire (81-84) associé à au moins un équipement domotique (21-27) prédéterminé, par le terminal nomade (50) appartenant à un usager (U50) du bâtiment (1 ; 5) ;
- une étape (160 ; 260) de connexion du terminal nomade (50) au point de commande (30) par l'intermédiaire de la passerelle (40) ;
- une étape (170, 270) d'identification du marqueur primaire (81-84) par le point de commande (30) ; et
- une étape (180 ; 280) de pilotage du ou des équipements domotiques (21-27) associés au marqueur primaire (81-84), dans un mode avancé (M2) où le point de commande (30) pilote chaque équipement domotique (21-27) concerné en fonction d'informations transmises par le terminal nomade (50) en communication avec le point de commande (30) par l'intermédiaire de la passerelle (40).

12. Procédé selon la revendication 11, **caractérisé en ce qu'**il comprend également au moins :
- une première étape (220B) de lecture d'un marqueur global (90), associé au point de commande (30), par le terminal nomade (50) ; et
- une deuxième étape (270) d'identification du marqueur global (90) par le point de commande (30) ;
cette première étape (220) et cette deuxième étape (270) devant être accomplies, en plus de l'étape d'identification du marqueur primaire (81-84), pour activer le mode avancé (M2) du point de commande (30).

13. Procédé selon l'une des revendications 11 ou 12, **caractérisé en ce qu'**il comprend également une étape (190 ; 290) de désactivation du mode avancé (M2), cette étape de désactivation (190 ; 290) étant provoquée par la réalisation d'une condition (CD) de déconnexion entre le terminal (50) et le point de commande (30).

## Patentansprüche

1. System (10) zur Steuerung wenigstens einer Haushaltsanwendung (21-27), mit dem ein Gebäude (1; 5) versehen ist, wobei das System (10) Folgendes umfasst:
- einen Steuerpunkt (30), der/die Haushaltsanwendung/Haushaltsanwendungen (21-27), mit der/denen das Gebäude (1; 5) versehen ist, ansteuert;
- ein Gateway (40) für die Kommunikation zwischen dem Steuerpunkt (30) und wenigstens einem mobilen Endgerät (50), das einem Benutzer (U50) des Gebäudes (1; 5) zugehörig ist; und
- wenigstens eine primäre Kennzeichnung (81-84), die durch Software- und Hardware-Erkennungseinrichtungen (52), mit denen das mobile Endgerät (50) versehen ist, lesbar ist, wobei die primäre Kennzeichnung (81-84) wenigstens einer vorher bestimmten Haushaltsanwendung (21-24) zugeordnet ist;
wobei das System (10) **dadurch gekennzeichnet ist, dass** der Steuerpunkt (30) eingerichtet ist für den Betrieb:
- in einem Normalmodus (M1), wo der Steuerpunkt (30) die Haushaltsanwendung (21-27) unabhängig ansteuert, und
- in einem erweiterten Modus (M2), wo der Steuerpunkt (30) die Haushaltsanwendung (21-27) in Abhängigkeit von Informationen ansteuert, die von dem mobilen Endgerät (50) in Kommunikation mit dem Steuerpunkt (30) über das Gateway (40) übertragen werden;
und damit die Identifizierung der primären Kennzeichnung (81-84), durch Identifizierungseinrichtungen (32), mit denen der Steuerpunkt (30) versehen ist, eine Aktivierung des erweiterten Modus (M2) für die Ansteuerung der Haushaltsanwendung/Haushaltsanwendungen (21-27), die dieser primären Kennzeichnung (81-84) zugeordnet sind, gestattet.

2. System (10) nach dem vorhergehenden Anspruch, **dadurch gekennzeichnet, dass** es wenigstens eine einzelne primären Kennzeichnung (81-83) umfasst, die einer vorher bestimmten Haushaltsanwendung (21-23) zugeordnet ist, wobei die Identifizierung der einzelnen primären Kennzeichnung (81-83) die Aktivierung des erweiterten Modus (M2) für die Ansteuerung der vorher bestimmten Haushaltsanwendung (21-23) gestattet.

3. System (10) nach einem der vorhergehenden Ansprüche, **dadurch gekennzeichnet, dass** es wenigstens eine primäre Gruppen-Kennzeichnung (84) umfasst, die einer Gruppe (28) zugeordnet ist, die mehrere Haushaltsanwendungen (24-27) enthält, wobei die Identifizierung der primären Gruppen-Kennzeichnung (84) die Aktivierung des erweiterten Modus (M2) für die Ansteuerung sämtlicher Haushaltsanwendungen (24-27) der Gruppe (28) gestattet.

4. System (10) nach dem vorhergehenden Anspruch, **dadurch gekennzeichnet, dass** der Steuerpunkt (30) die Haushaltsanwendungen (21-27) einer Gruppe entweder einzeln oder in Koordination miteinander ansteuert und dass wenigstens bestimmte (24, 25) der Haushaltsanwendungen (24-27) der Gruppe (28) im erweiterten Modus (M2) gemäß einer Koordination angesteuert werden, die gegenüber dem Normalmodus (M1) verschieden ist.

5. System (10) nach einem der vorhergehenden Ansprüche, **dadurch gekennzeichnet, dass** es ferner eine globale Kennzeichnung (80) umfasst, die dem Steuerpunkt (30) zugeordnet ist, und dass die Aktivierung des erweiterten Modus (M2) für die Ansteuerung der Haushaltsanwendung/Haushaltsanwendungen (21-27), die dieser primären Kennzeichnung (81-84) zugeordnet sind, nach Identifizierung, einerseits, der globalen Kennzeichnung (90) und, andererseits, der primären Kennzeichnung (81-84) gestattet wird.

6. System (10) nach dem vorhergehenden Anspruch, **dadurch gekennzeichnet, dass** die Ausgestaltung des Systems (10) einen Zeitparameter, zum Beispiel eine genaue Stunde des Tages oder einen verstrichenen Zeitraum, integriert, der die Identifizierung der globalen Kennzeichnung (90) und/oder der primären Kennzeichnung (81-84) durch die Identifizierungseinrichtungen (32) aufhebt und den erweiterten Modus (M2) für die Ansteuerung der Haushaltsanwendungen (21-27) deaktiviert.

7. System (10) nach einem der vorhergehenden Ansprüche, **dadurch gekennzeichnet, dass** die Identifizierung der oder einer der Kennzeichnungen (81-84), durch die Identifizierungseinrichtungen (32), mit denen der Steuerpunkt (30) versehen ist, die Aktivierung des erweiterten Modus (M2) für die Ansteuerung der zugeordneten Haushaltsanwendung/Haushaltsanwendungen (21-27) mit einer zeitlichen, räumlichen und/oder funktionalen Begrenzung gestattet.

8. System (10) nach einem der vorhergehenden Ansprüche, **dadurch gekennzeichnet, dass** es ferner wenigstens eine Hilfskennzeichnung (85) umfasst, deren Erkennung, durch die Erkennungseinrichtungen (52), mit denen das mobile Endgerät (50) versehen ist, eine Verbindung für die Kommunikation mit einem Endgerät erzeugt, das einem Mitglied der Belegschaft des Gebäudes, insbesondere einem Kellner, einem Oberkellner, einem Reinigungsmitarbeiter oder einem Rezeptionsmitarbeiter, zur Verfügung steht.

9. System (10) nach einem der vorhergehenden Ansprüche, **dadurch gekennzeichnet, dass** die Erkennungseinrichtungen (52), mit denen das mobile Endgerät (50) versehen ist, eine Bilderfassungsvorrichtung (54) umfassen, insbesondere einen Fotoapparat, einen Scanner und/oder eine Videokamera.

10. System (10) nach einem der vorhergehenden Ansprüche, **dadurch gekennzeichnet, dass** die oder wenigstens eine der Kennzeichnungen (81-84; 85; 90) eine Barcode-Kennzeichnung ist, die insbesondere durch einen Fotoapparat lesbar ist.

11. Verfahren zum Einsatz eines Systems (10) zur Steuerung von Haushaltsanwendungen (21-27), mit denen ein Gebäude (1; 5) versehen ist, wobei das System (10) Folgendes umfasst:
- einen Steuerpunkt (30), der wenigstens ein Domotikgerät (21-27), mit dem das Gebäude (1; 5) versehen ist, ansteuert, wobei der Steuerpunkt (30) die Haushaltsanwendung (21-27) in einem Normalmodus (M1) unabhängig ansteuert, und
- ein Gateway (40) für die Kommunikation zwischen dem Steuerpunkt (30) und wenigstens einem mobilen Endgerät (50), das einem Benutzer (U50) des Gebäudes (1; 5) zugehörig ist;
wobei das Verfahren **dadurch gekennzeichnet ist, dass** es die folgenden Schritte umfasst:
- einen Schritt (120; 220) zum Lesen einer primären Kennzeichnung (81-84), die wenigstens einer vorher bestimmten Haushaltsanwendung (21-27) zugeordnet ist, durch das mobile Endgerät (50), das einem Benutzer (U50) des Gebäudes (1; 5) zugehörig ist;
- einen Schritt (160; 260) zum Verbinden des mobilen Endgeräts (50) mit dem Steuerpunkt (30) über das Gateway (40);
- einen Schritt (170; 270) zum Identifizieren der primären Kennzeichnung (81-84) durch den Steuerpunkt (30); und
- einen Schritt (180; 280) zum Ansteuern der Haushaltsanwendung/Haushaltsanwendungen (21-27), die der primären Kennzeichnung (81-84) zugeordnet sind, in einem erweiterten Modus (M2), wo der Steuerpunkt (30) jede betroffene Haushaltsanwendung (21-27) in Abhängigkeit von Informationen ansteuert, die von dem mobilen Endgerät (50) in Kommunikation mit dem Steuerpunkt (30) über das Gateway (40) übertragen werden.

12. Verfahren nach Anspruch 11, **dadurch gekennzeichnet, dass** es ferner wenigstens Folgendes umfasst:
- einen ersten Schritt (220B) zum Lesen einer globalen Kennzeichnung (90), die dem Steuerpunkt (30) zugeordnet ist, durch das mobile Endgerät (50); und
- einen zweiten Schritt (270) zum Identifizieren der globalen Kennzeichnung (90) durch den Steuerpunkt (30);
wobei dieser erste Schritt (220) und dieser zweite Schritt (270) zusätzlich zu dem Schritt zum Identifizieren der primären Kennzeichnung (81-84) ausgeführt werden müssen, um den erweiterten Modus (M2) des Steuerpunktes (30) zu aktivieren.

13. Verfahren nach einem der Ansprüche 11 oder 12, **dadurch gekennzeichnet, dass** es ferner einen Schritt (190; 290) zum Deaktivieren des erweiterten Modus (M2) umfasst, wobei dieser Schritt zum Deaktivieren (190; 290) durch die Erfüllung einer Trennungsbedingung (CD) zwischen dem Endgerät (50) und dem Steuerpunkt (30) ausgelöst wird.

## Claims

1. System (10) for controlling at least one automation equipment item (21-27) equipping a building (1; 5), the system (10) including:
- a remote control unit (30) controlling the automation equipment item or items (21-27) equipping the building (1; 5);
- a gateway (40) for communication between the remote control unit (30) and at least one mobile terminal (50) belonging to a user (U50) of the building (1; 5); and
- at least one primary marker (81-84) readable by hardware and software recognition means (52) equipping the mobile terminal (50), the primary marker (81-84) being associated with at least one predetermined automation equipment item (21-24);
the system (10) being **characterized in that** the remote control unit (30) is configured to operate:
- in a normal mode (M1), in which the remote control unit (30) independently controls the automation equipment item (21-27),
- and in an advanced mode (M2), in which the remote control unit (30) controls the automation equipment item (21-27) on the basis of information transmitted by the mobile terminal (50) communicating with the remote control unit (30) via the gateway (40);
and so that the identification of the primary marker (81-84), by identification means (32) equipping the remote control unit (30), authorizes an activation of the advanced mode (M2) for controlling the automation equipment item (21-27) associated with said primary marker (81-84).

2. System (10) according to the previous claim, **characterized in that** it includes at least one individual primary marker (81-83) associated with a predetermined automation equipment item (21-23), the identification of the individual primary marker (81-83) authorizing the activation of the advanced mode (M2) for the control of the predetermined automation equipment item (21-23).

3. System (10) according to one of the previous claims, **characterized in that** it includes at least one group primary marker (84) associated with a group (28) including a plurality of automation equipment items (24-27), the identification of the group primary marker (84) authorizing the activation of the advanced mode (M2) for the control of all of the automation equipment items (24-27) of the group (28).

4. System (10) according to the previous claim, **characterized in that** the remote control unit (30) controls the automation equipment items (21-27) of a group either one-to-one or in coordination with one another, and **in that** at least some (24, 25) of the automation equipment items (24-27) of the group (28) is controlled in advanced mode (M2) according to a different coordination with respect to the normal mode (M1).

5. System (10) according to one of the previous claims, **characterized in that** it also includes a global marker (90) associated with the remote control unit (30), and **in that** the activation of the advanced mode (M2) for controlling the automation equipment item or items (21-27) associated with a primary marker (81-84) is authorized after identification, on the one hand, of the global marker (90) and, on the other hand, of the primary marker (81-84).

6. System (10) according to the previous claim, **characterized in that** the configuration of the system (10) integrates a time parameter, for example a specific time of day or an elapsed time, which cancels the identification of the global marker (90) and/or the primary marker (81-84) by the identification means (32) and deactivates the advanced mode (M2) for control of the automation equipment items (21-27).

7. System (10) according to one of the previous claims, **characterized in that** the identification of the marker or one of the markers (81-84), by the identification means (32) equipping the remote control unit 30, authorizes the activation of the advanced mode (M2) for control of the associated automation equipment item or items (21-27), with a time, spatial and/or functional limit.

8. System (10) according to one of the previous claims, **characterized in that** it also includes at least one auxiliary marker (85), the recognition of which, by the recognition means (52) equipping the mobile terminal (50), creates a communication link with a terminal available to a member of the building staff, in particular a server, a hotel manager, a cleaning person or a receptionist.

9. System (10) according to one of the previous claims, **characterized in that** the recognition means (52) equipping the mobile terminal (50) include an image acquisition device (54), in particular a photo camera, a scanner and/or a video camera.

10. System (10) according to one of the previous claims, **characterized in that** the marker or at least one of the markers (81-84; 85; 90) is a barcode marker, readable in particular by a photo camera.

11. Method for implementing a system (10) for controlling automation equipment items (21-27) equipping a building (1; 5), the system (10) including:
- a remote control unit (30) controlling at least one automation equipment item (21-27) equipping the building (1; 5), the remote control unit (30) independently controlling the automation equipment item (21-27) in a normal mode (M1), and
- a gateway (40) for communication between the remote control unit (30) and at least one mobile terminal (50) belonging to a user (U50) of the building (1; 5),
the method being **characterized in that** it includes the following successive steps:
- a step (120; 220) of reading a primary marker (81-84) associated with at least one predetermined automation equipment item (21-27), performed by the mobile terminal (50) belonging to a user (U50) of the building (1; 5);
- a step (160; 260) of connecting the mobile terminal (50) to the remote control unit (30) via the gateway (40);
- a step (170, 270) of identifying the primary marker (81-84) by the remote control unit (30); and
- a step (180; 280) of controlling the automation equipment item or items (21-27) associated with the primary marker (81-84), in an advanced mode (M2) in which the remote control unit (30) controls each corresponding automation equipment item (21-27) on the basis of information transmitted by the mobile terminal (50) communicating with the remote control unit (30) via the gateway (40).

12. Method according to claim 11, **characterized in that** it also includes at least:
- a first step (220B) of reading a global marker (90), associated with the remote control unit (30), by the mobile terminal (50); and
- a second step (270) of identifying the global marker (90) by the remote control unit (30);
wherein this first step (220) and this second step (270) must be accomplished, in addition to the step of identifying the primary marker (81-84), in order to activate the advanced mode (M2) of the remote control unit (30).

13. Method according to one of claims 11 or 12, **characterized in that** it also includes a step (190; 290) of deactivating the advanced mode (M2), this deactivation step (190; 290) being caused by satisfying a condition (CD) of disconnection between the terminal (50) and the remote control unit (30).
